# EUROPEAN PATENT APPLICATION

(11) **EP 4 840 563 A1**
(43) Date of publication of application: **18.11.2026**
(21) Application number: 25205893.8
(22) Date of filing: 30.09.2025
(51) Int. Cl.: B22F 10/28, B22F 12/00, B22F 12/50, B22F 12/57, B22F 12/67, B29C 64/153, B29C 64/205, B29C 64/343, B33Y 10/00, B33Y 30/00, B33Y 40/00

(54) **POWDER APPLICATION DEVICE, MANUFACTURING APPARATUS, AND METHOD FOR ADDITIVELY MANUFACTURING OBJECTS FROM A POWDER MATERIAL**

(71) Applicant: Additive Manufacturing IP GmbH, 80539 München (DE)
(72) Inventor: Greselin, Stefano, 36050 Bolzano vicentino (Vi) (IT); Brusaterra, Oscar, 36034 Malo (Vi) (IT)
(74) Representative: Gleiss Große Schrell und Partner mbB

(57) **Abstract**

The invention relates to a powder application device (3) for applying powder material (P) to a working area (11) of a manufacturing apparatus (1) for the additive manufacturing of objects from the powder material (P), wherein the powder application device (3) comprises a powder distributing element (23) located on a lower side (25) of the powder application device (3), wherein the powder distributing element (23) faces the working area (11) of the manufacturing apparatus (1) when the powder application device (3) is installed at the manufacturing apparatus (1), the powder distributing element (23) extending along a longitudinal direction of the powder application device (3) and being designed and arranged to distribute the powder material (P) over the working area (11), wherein the powder application device (3) comprises a first powder feed channel (27) and a second powder feed channel (29), the powder feed channels (27, 29) both opening towards the lower side (25) and being arranged consecutively in a stroke direction of the powder application device (3) perpendicular to the longitudinal direction, wherein the powder distributing element (23) is arranged between the first and second powder feed channels (27, 29) in the stroke direction, wherein the powder application device (3) further comprises a powder storage chamber (37) located above a lower part of the second powder feed channel (29) in a height direction extending from the lower side (25) towards an upper side (39) of the powder application device (3), the powder storage chamber (37) opening towards the upper side (39), and the powder application device (3) comprises a powder release mechanism (31) rotatably movable between an open state and a closed state, wherein a first fluid connection for powder material (P) between the powder storage chamber (37) and the lower side (25) via the second powder feed channel (29) is open in the open state and closed in the closed state, and wherein the powder release mechanism (31) is adapted and arranged to be passively rotated between the closed state and the open state.

## Description

The invention relates to a powder application device for applying a powder material to a working area of a manufacturing apparatus for additive manufacturing of objects from the powder material, a manufacturing apparatus for additive manufacturing of objects from a powder material having such a powder application device, and a method for additively manufacturing objects from a powder material using such a manufacturing apparatus.

In a manufacturing device for the additive manufacturing of objects or components from a powder material, the powder material is applied layer by layer in a working area by a powder application device. For this purpose, the powder application device, having a powder distributing element, is displaced alternately from a first working area side to a second working area side of the working area, and back, with the powder material to be distributed being arranged in front of the powder distributing element in the respective orientation of a stroke direction, i.e. a direction of displacement of the powder application device, so that the powder is distributed on the working area by the powder distributing element during the displacement of the powder application device along the stroke direction. A powder supply device can be provided on the first working area side, and powder material may be released by the powder supply device both onto the working area in front of the powder distributing element in a first orientation of the stroke direction, and in a powder storage chamber of the powder application device. During the movement of the powder application device from the first working area side to the second working area side, the powder material arranged in front of the powder distributing element is distributed over the working area, and the powder material stored in the powder storage chamber is transported to the second working area side, where eventually it is released from the powder storage chamber onto the working area in front of the powder distributing element in a second orientation of the stroke direction. During the movement of the powder application device from the second working area side to the first working area side, the powder material then arranged in front of the powder distributing element is distributed over the working area, and the cycle may start again. In order to release the powder material from the powder storage chamber an active powder release mechanism may be applied, which may comprise some kind of actuator as, e.g., an electric motor. However, such a device consumes a considerable amount of energy and is complicated, prone to failure, and expensive. In the alternative, a passive powder release mechanism may be applied, which typically comprises some kind of slider, or otherwise complicated moving elements, e.g., an element relying on spring-pretensioning and/or pivoting about an external axis, which is not reliable in terms of a full opening, and prone to powder material getting stuck and blocking the increasingly narrowing passage.

It is therefore an object of the invention to provide a powder application device for applying powder material to a working area of a manufacturing apparatus for additive manufacturing of objects from the powder material, a manufacturing apparatus for the additive manufacturing of objects from a powder material having such a powder application device, and a method for additively manufacturing objects from a powder material using such a manufacturing apparatus which at least in part overcome the drawbacks identified above.

This object is achieved by providing the present technical teachings, in particular the teachings of the independent claims as well as the teachings of the dependent claims and the preferred embodiments disclosed in the description.

According to a first aspect, the object is in particular achieved by providing a powder application device for applying powder material to a working area of a manufacturing apparatus for the additive manufacturing of objects from the powder material, wherein
- the powder application device comprises a powder distributing element located on a lower side of the powder application device, wherein the powder distributing element faces the working area of the manufacturing apparatus when the powder application device is installed at the manufacturing apparatus, the powder distributing element extending along a longitudinal direction of the powder application device and being designed and arranged to distribute the powder material over the working area, wherein
- the powder application device comprises a first powder feed channel and a second powder feed channel, the powder feed channels both opening towards the lower side and being arranged consecutively in a stroke direction of the powder application device perpendicular to the longitudinal direction, wherein the powder distributing element is arranged between the first and second powder feed channels in the stroke direction, wherein
- the powder application device further comprises a powder storage chamber located above a lower part of the second powder feed channel in a height direction extending from the lower side towards an upper side of the powder application device, the powder storage chamber opening towards the upper side, and
- the powder application device comprises a powder release mechanism rotatably movable between an open state and a closed state, wherein a first fluid connection for powder material between the powder storage chamber and the lower side via the second powder feed channel is open in the open state and closed in the closed state, and wherein
- the powder release mechanism is adapted and arranged to be passively rotated between the closed state and the open state.

By providing a passive powder release mechanism, the energy consumption of the powder application device is low, and the mechanism can be designed to be reliable and inexpensive. Because the powder release mechanism is rotated between the closed state and the open state, it can be designed even more reliable and advantageously provide a large opening with a dramatically reduced risk that any powder material may get stuck and the opening become narrowed. In this way, a full and reliable release of the complete powder material stored in the storage chamber can be guaranteed for a long time of use and many application cycles. Further, there is a drastically reduced risk that previously stuck powder material may fall onto the working area in an undesired and irreproducible manner. Still further, the rotational movement permits a more reliable seal design, where preferably friction surfaces may be completely omitted.

In the context of the present technical teachings, distributing the powder material on the working area is understood to mean, in particular, coating the working area with the powder material.

Preferably, the powder application device has exactly one powder distributing element, in particular only one - single - powder distributing element.

In one embodiment, the powder distributing element is designed as a lip, lamella or blade which extends, on the one hand, along the longitudinal direction and, on the other hand, extends from the lower side of the powder application device towards a working surface of the working area, so that the powder material can be distributed by means of the powder distributing element when the powder application device is displaced along the stroke direction. The powder distributing element preferably pushes the powder material in front of it, whereby the powder material is simultaneously smoothed and runs laterally along the powder distributing element so that it is fanned out and distributed in the longitudinal direction of the powder distributing element.

In particular, the powder distributing element faces the working area of the manufacturing apparatus when the powder application device is installed in a predetermined way at - or in - the manufacturing apparatus.

In an embodiment, the powder distributing element may be a lip, lamella or blade, or a lip-like, lamella-like or blade-like structure. In particular, the powder distributing element may be at least one of rigid, elastic, and soft, e.g., made from an elastomer, or rubber.

That the powder feed channels open towards the lower side in particular means within the context of the present technical teachings that the powder feed channels both are open to the lower side, or - in other words - both powder feed channels each have a channel opening directed towards or communicating with the lower side.

In particular, a lower part of each powder feed channel is open towards the lower side. Preferably, each powder feed channel comprises an upper part which opens towards the upper side. In particular, the upper part of the second powder feed channel discharges into the powder storage chamber.

The powder storage chamber may additionally be located above the lower part of the first powder feed channel, such that the powder storage chamber is located above both lower parts of the first and the second powder feed channel.

The first powder feed channel may run through the powder release mechanism. In the alternative, the first powder feed channel may be completely separate from the powder release mechanism, and in particular separate from the powder storage chamber.

That the powder feed channels are arranged consecutively in the stroke direction in particular means within the context of the present technical teachings that the powder feed channels are arranged one behind the other along the stroke direction, when the powder application device is installed in the predetermined way at - or in - the manufacturing apparatus.

Respectively, the powder distributing element is in particular arranged between the first and second powder feed channel along the stroke direction.

That the powder storage chamber opens towards the upper side in particular means within the context of the present technical teachings that the powder storage chamber is open to the upper side or - in other words - the powder storage chamber has a chamber opening directed towards or communicating with the upper side, in particular via the upper part of the second powder feed channel.

That the powder release mechanism is adapted and arranged to be passively rotated between the closed state and the open state in particular means within the context of the present technical teachings that the rotation of the powder release mechanism is effected in a purely mechanical way, especially with no actors. In particular, no hydraulic, pneumatic or electric actors, neither aboard the powder application device nor external to the powder application device, are provided to act upon the powder release mechanism. Preferably, the powder release mechanism does not comprise any actor, or - in other words - is free from any actor; the powder release mechanism does in particular not comprise any hydraulic, pneumatic or electric actor.

That the powder release mechanism is rotated in particular means within the context of the present technical teachings that the powder release mechanism is rotated about its own longitudinal axis, in particular in contrast to being pivoted about any external axis. Further, the longitudinal axis of the powder release mechanism extends parallel to the longitudinal direction or in the longitudinal direction. Still further, the longitudinal axis is perpendicular to the stroke direction.

According to a further embodiment, the powder release mechanism comprises at least one release element, selected from the group consisting of
- at least one chamber wall of the powder storage chamber which is arranged rotatably about the longitudinal axis,
- the powder storage chamber, arranged rotatably about the longitudinal axis,
- a lid, rotatable about the longitudinal axis, the lid being arranged to block the first fluid connection in the closed state and to clear the first fluid connection in the open state, and
- a combination of at least two of said release elements.

In one embodiment, the powder storage chamber may comprise a plurality of chamber walls, wherein at least one first chamber wall of the chamber walls is a rotatable chamber wall, arranged rotatably about the longitudinal axis of the powder storage chamber, wherein at least one second chamber wall of the chamber walls is a fixed chamber wall, which is not movable relative to a mainframe or centre of gravity of the powder application device. Preferably, the plurality of chamber walls consists of exactly two groups of chamber walls, i.e. first rotatable chamber walls and second fixed chamber walls.

In another embodiment, the powder storage chamber itself is arranged rotatably about the longitudinal axis, in particular about its own longitudinal axis. The powder storage chamber may comprise exactly one, and only one, chamber wall having the chamber opening, and the chamber wall and thus the chamber opening is rotated when the powder chamber is rotated. Further, in the closed state, the chamber opening faces the upper side, and in the open state, the chamber opening faces the lower side, such that an interior of the powder storage chamber communicates with the lower part of the second powder feed channel via the chamber opening and the first fluid connection is open. The powder storage chamber may be generally cylindrical, or cylindrical. In an embodiment, the powder storage chamber comprises a cylindrical wall having a slit opening as the chamber opening. In the alternative, the powder storage chamber may comprise a plurality of chamber walls, wherein at least one of the chamber walls has the chamber opening, and the chamber walls are rotatable together about the longitudinal axis, collectively. In particular in such an embodiment, the first powder feed channel may be completely separate from the powder release mechanism, and in particular separate from the powder storage chamber.

In the alternative, or additionally, a lid is assigned to the powder storage chamber, the lid being rotatable about the longitudinal axis such that the lid blocks the first fluid connection in the closed state and gives free the first fluid connection in the open state.

According to a further embodiment, the powder release mechanism comprises a passive first actuation element, adapted to engage a passive second actuation element of the manufacturing apparatus when the powder application device reaches a first predetermined position in the manufacturing apparatus, such that the powder release mechanism is actuated when the first actuation element engages the second actuation element. In this way, advantageously, the powder release mechanism is activated in a simple and most reliable, purely mechanical and thus passive manner, without any active elements like hydraulic, pneumatic or electric actors. Preferably, the energy needed to rotate the powder release mechanism between the closed and the open state is harvested from the movement of the powder application device along the stroke direction when the first actuation element engages the second actuation element.

In an embodiment, the first actuation element is a gear. This is a particular simple and reliable embodiment of the first actuation element. Preferably, the first actuation element is a gearwheel, in particular a single gearwheel. In particular, the first actuation element does not comprise any springs, and does not cooperate with any springs. Also, the second actuation element does not comprise any springs, and does not cooperate with any springs. Thus, the powder release mechanism is completely independent from any spring actuation or spring-pretensioning, or, in other words, does not rely on any spring actuation or spring-pretensioning, which makes it very stable and reliable, in particular on a long timescale and for a large number of repetitions.

In particular, the gearwheel is coupled to the at least one release element, in particular selected from the group consisting of the first chamber wall, the powder storage chamber, and the lid. Preferably, the gearwheel is directly coupled to, or part of, i.e. formed in one piece with, the at least one release element, in particular selected from the group consisting of the first chamber wall, the powder storage chamber, and the lid.

In an embodiment, the powder release mechanism does not comprise any spring, or - in other words - is free of springs. Preferably, the powder application device does not comprise any spring, or - in other words - is free of springs.

According to a further embodiment, the powder release mechanism is designed and arranged such that a second fluid connection between the upper side and the lower side via the first powder feed channel is open - i.e. clear, or free - in the closed state. Thus, advantageously, powder material can run from the upper side to the lower side through the first powder feed channel even when the powder release mechanism is in its closed state.

In an embodiment, the second fluid connection is closed in the open state. Preferably, the second fluid connection is closed in the open state by the same release element which closes the first fluid connection in the closed state, in particular by the respective chamber wall or the lid. In this embodiment, the release element blocks the first fluid connection in the closed state and at the same time clears the second fluid connection; and the release element clears the first fluid connection in the open state and at the same time blocks the second fluid connection.

In another embodiment, the second fluid connection is open both in the closed state and in the open state. This means that, in this embodiment, the powder release mechanism does not affect or alter the second fluid connection, but only the first fluid connection.

In an embodiment, the powder release mechanism is designed and arranged such that the second fluid connection extends through the powder release mechanism. In particular, the first powder feed channel extends through the powder release mechanism.

According to a further embodiment, the release element is rotatable by an angle of 45° to 120°, preferably 50° to 110°, preferably 60° to 100°, preferably 70° to 90°, preferably more than 70°, preferably 80°. Advantageously, a large rotational movement is provided for the release element in order to fully open the second powder feed channel in the open state in order to avoid that any powder material gets stuck.

According to a second aspect, the object is also achieved by providing a manufacturing apparatus for the additive manufacturing of objects from a powder material, comprising
- at least one beam generating device, adapted to generate at least one energy beam,
- at least one scanner device, adapted to locally selectively scan a working area with the at least one energy beam in order to manufacture at least one object from the powder material arranged in the working area, and
- a powder application device according to the invention or according to any of the embodiments described above, wherein
- the powder application device is moveable relative to the working area.

With respect to the manufacturing apparatus, in particular the same or at least similar advantages are achieved as explained before in conjunction with the powder application device.

Additive, or generative, manufacturing of an object or a component is understood to mean within the context of the present technical teachings in particular a layer-by-layer build-up of the object from a powder material, in particular a powder bed-based process for producing an object in a powder bed, in particular a manufacturing process selected from a group consisting of selective laser sintering, selective laser melting, laser metal fusion (LMF), direct metal laser melting (DMLM), laser net shaping manufacturing (LNSM), (selective) electron beam melting (S)EBM, and a laser engineered net shaping (LENS). Accordingly, the manufacturing apparatus in particular is adapted to carry out at least one of the aforementioned additive manufacturing processes.

The at least one energy beam is in particular selected from a group consisting of an electromagnetic beam, in particular an optical working beam, in particular a laser beam, and a particle beam, in particular an electron beam. The energy beam can be continuous or pulsed, in particular continuous laser radiation or pulsed laser radiation. In one embodiment, all energy beams of a plurality of energy beams are laser beams. Preferably, the at least one beam generating device comprises at least one laser.

In particular, the powder application device is movably arranged in the manufacturing apparatus, relative to the working area.

In an embodiment, the beam generating device is a laser source. More particularly, the energy beam is a laser beam.

The manufacturing apparatus may comprise more than one beam generating device in order to generate more than one energy beam. Additionally, or in the alternative, the beam generating device may be adapted to generate more than one energy beam. If the manufacturing apparatus comprises a plurality of energy beams, the scanner device may be adapted to locally selectively scan the entire working area or respective parts of the working area with the more than one energy beam. Additionally, or in the alternative, the manufacturing apparatus may comprise more than one scanner device, where each of the scanner devices may be assigned to a particular energy beam or to several of the energy beams.

According to a further embodiment, the powder application device is bidirectionally moveable across the working area along a stroke direction. Advantageously, the powder application device can distribute powder over the working area in both orientations along the stroke direction, such that unproductive empty runs of the powder application device can be avoided.

That the powder application device is bidirectionally movable in particular means within the context of the present technical teachings that the powder application device is movable back and forth, in particular from a first working area side of the working area to a second working area side thereof, and back from the second working area side to the first working area side.

According to a further embodiment, the manufacturing apparatus comprises a passive second actuation element adapted to engage the - passive - first actuation element of the powder application device when the powder application device reaches a first predetermined position relative to the working area, such that the powder release mechanism of the powder application device is actuated when the first actuation element engages the second actuation element.

The first predetermined position is preferably arranged at one side of the working area, in particular at the second working area side. More particularly, the first predetermined position is arranged at a margin of the working area. Further, in addition, or in the alternative, the first predetermined position is arranged in a region of an end position of the stroke, i.e. an end position of the back-and-forth movement, of the powder application device.

In particular, the second actuation element is arranged at the second working area side. More particularly, the second actuation element is arranged at the margin of the working area. Further, in addition, or in the alternative, the second actuation element is arranged in the region of the end position of the stroke, i.e. the end position of the back-and-forth movement, of the powder application device.

In an embodiment, the second actuation element is a rack. This, in particular in combination with a gearwheel as the first actuation element, is a particular simple and reliable embodiment of the second actuation element. Preferably, the second actuation element is a selected from a group, consisting of a gear rack, a guide rack, a guideway rack, a steering rack, a toothed rack, and a combination of at least two of said racks. Preferably, the rack as the second actuation element can easily and reliably cooperate with the gearwheel as the first actuation element in order to rotate the powder release mechanism between the closed state and the open state.

According to a further embodiment, the powder release mechanism and the second actuation element are designed such that the powder release mechanism is rotated in the open state when the powder application device reaches the first predetermined position. In other words, the powder release mechanism is rotated in the open state while the powder application device approaches the end position or dead centre of its stroke at the first predetermined position of the second working area side, in particular while the gearwheel meshes with the rack. The energy needed for the rotational motion of the powder release mechanism is harvested from the linear movement of the powder application device from the first working area side to the second working area side.

According to a further embodiment, the powder release mechanism and the second actuation element are designed such that the powder release mechanism is rotated in the closed state when the powder application device leaves the first predetermined position. In other words, the powder release mechanism is rotated in the closed state while the powder application device leaves the end position or dead centre of its stroke, aiming for the first working area side, in particular while the gearwheel meshes with the rack. The energy needed for the rotational motion of the powder release mechanism is harvested from the linear movement of the powder application device from the second working area side to the first working area side.

According to a further embodiment, the powder application device is moveable between the first working area side of the working area and the second working area side thereof, the second working area side being opposite to the first working area side in the stroke direction, wherein a powder supply device is arranged on the first working area side, the powder supply device being adapted to release powder material onto the - open - upper side of the powder application device when the powder application device is at a second predetermined position on the first working area side - beneath the powder supply device -, and wherein the second actuation element is arranged on the second working area side - at the first predetermined position. Advantageously, powder material can be delivered to the powder application device on the first working area side, partly stored in the powder storage chamber, partly distributed over the second working area side during the stroke movement of the powder application device - in a first orientation - from the first working area side towards the second working area side, and further partly transported to the second working area side, then released onto the working area at the second working area side, and finally partly distributed over the working area during the stroke movement of the powder application - in a second orientation - from the second working area side towards the first working area side.

According to a third aspect, the object is also achieved by providing a method for additively manufacturing objects from a powder material using a manufacturing apparatus according to the invention or according to any of the embodiments described above, wherein
a) the powder storage chamber of the powder application device is charged with powder material at the first working area side - in particular in the second predetermined position -, wherein - in particular at the same time - powder material is discharged through the first powder feed channel onto the working area, in particular when the powder release mechanism is in its closed state, wherein
b) the powder application device is displaced along the stroke direction - in a first orientation of the displacement - from the first working area side to the second working area side opposite to the first working area side in the stroke direction, the powder material applied to the working area through the first powder feed channel being distributed on, or in other words over, the working area, wherein,
c) when the powder application device reaches the second working area side - in particular the first predetermined position -, the powder release mechanism is rotated from the closed state to the open state, so that powder material is discharged from the powder storage chamber onto the working area through the second powder feed channel, wherein
d) the powder application device is displaced along the stroke direction - in a second orientation of the displacement - from the second working area side back to the first working area side, wherein the powder material discharged from the powder storage chamber onto the working area is distributed on, or in other words over, the working area.

With respect to the method, in particular the same or at least similar advantages are achieved as explained before in conjunction with the powder application device or the manufacturing apparatus.

In particular, in step a), the powder storage chamber of the powder application device is charged with powder material at the first working area side - in particular in the second predetermined position -, and at the same time powder material is discharged through the first powder feed channel onto the working area, in particular when the powder release mechanism is in its closed state. Preferably, the upper side of the powder application device is charged with the powder material, and a first portion of the powder material is discharged through the first powder feed channel onto the working area, while a second portion of the powder material is stored in the powder storage chamber.

The powder material is in particular distributed over the working area during the movement of the powder application device by the powder distributing element.

According to a further embodiment, the powder material arranged in the working area is irradiated with the at least one energy beam before step c) or in step c).

In an embodiment, the powder material arranged in the working area is irradiated with the at least one energy beam in step b), in particular behind the powder application device during its movement. In addition, or in the alternative, the powder material is irradiated with the at least one energy beam in step d) - in particular behind the powder application device during its movement - or after step d).

Preferably, steps a) to d) are repeated, preferably until the manufacturing process is finished, and more specifically, no further powder material layer is needed in the working area in order to manufacture the desired object or objects.

A laser beam or an electron beam is preferably used as the energy beam.

Preferably, the component is manufactured by means of selective laser sintering and/or selective laser melting.

Preferably, a metallic or ceramic powder can be used as the powder material.

The invention is explained below in further detail with reference to the drawing. In the drawing
- Figure 1: shows an embodiment of a manufacturing apparatus;
- Figure 2: shows an embodiment of a powder application device;
- Figure 3: shows a cross-section of the powder application device of figure 2, and
- Figure 4: shows a fundamental functionality of the powder release mechanism of the powder application device of figure 2.

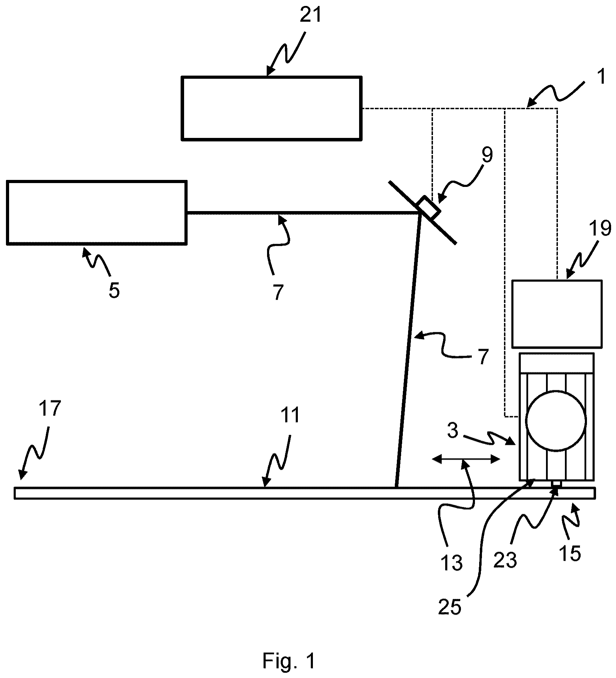

Fig. 1 shows an embodiment of a manufacturing apparatus 1 with a powder application device 3.

The manufacturing apparatus 1 is adapted to additively manufacture objects from a powder material. It comprises at least one beam generating device 5, adapted to generate at least one energy beam 7, in particular a laser beam, at least one scanner device 9, adapted to locally selectively scan a working area 11 with the at least one energy beam 7 in order to manufacture at least one object from the powder material arranged in the working area 11. The powder application device 3 is adapted to apply the powder material to the working area 11. Therefore, the powder application device 3 is bidirectionally moveable relative to the working area 11 back and forth along a stroke direction, indicated by an arrow 13.

Thus, the movement of the powder application device 3 along the stroke direction is horizontal in figure 1, from a right, first working area side 15 to a left, second working area side 17, and back, and a cycle of movement starts at the first working area side 15, extends over the second working area side 17 and finally ends again at the first working area side 15, when the powder application device 3 is returned. The cycle may then start again, and during a manufacturing process, the total number of cycles is adapted to a number of powder material layers needed in order to manufacture the desired object or objects.

On the first working area side 15, a powder supply device 19 is arranged in order to supply powder material to the powder application device 3.

Preferably, the manufacturing apparatus 1 further has a control device 21 which is adapted and connected to at least the scanner device 9, the powder application device 3, and the powder supply device 19 in order to control these devices, in particular to initiate the movement of the powder application device 3, to steer the at least one energy beam 7 over the working area 11, and optionally to trigger the powder supply device 19 to release powder material onto the powder application device 3.

A driving mechanism, which is not shown in the drawings, is assigned to the powder application device 3, and the driving mechanism is adapted and arranged to move the application device 3 along the stroke direction. The drive mechanism may be implemented - at least partly - in or on the powder application device 3 itself, or - at least partly - external to the powder application device 3. That the control device 21 is connected to the powder application device 3 in particular means that the control device 21 is connected to the driving mechanism. In an embodiment, the control device 21 is only connected to the driving mechanism and not connected to other parts or elements of the powder application device 3. In particular, the control device 21 is not connected to a - passive - powder release mechanism explained below.

The manufacturing apparatus 1 may comprise more than one beam generating device 5 in order to generate more than one energy beam 7. Additionally, or in the alternative, the beam generating device 5 may be adapted to generate more than one energy beam 7. If the manufacturing apparatus 1 comprises a plurality of energy beams 7, the scanner device 9 may be adapted to locally selectively scan the entire working area 11 or respective parts of the working area 11 with the plurality of energy beams 7. Additionally, or in the alternative, the manufacturing apparatus 1 may comprise more than one scanner devices 9, where each of the scanner devices 9 may be assigned to a particular energy beam 7 or to several of the energy beams 7.

The powder application device 3 comprises a powder distributing element 23 located on a lower side 25 of the powder application device 3, wherein the powder distributing element 3 faces the working area 11 when the powder application device 3 is installed at the manufacturing apparatus 1. The powder distributing element 23 extends along a longitudinal direction of the powder application device 3 - the longitudinal direction being perpendicular to the image plane of figure 1, and perpendicular to the stroke direction -, and the powder distributing element 23 is designed and arranged to distribute the powder material over the working area 11. The powder distributing element 23 may be a lip, lamella, blade or a like structure, in particular rigid or elastic or soft, e.g., made from an elastomer, or rubber.

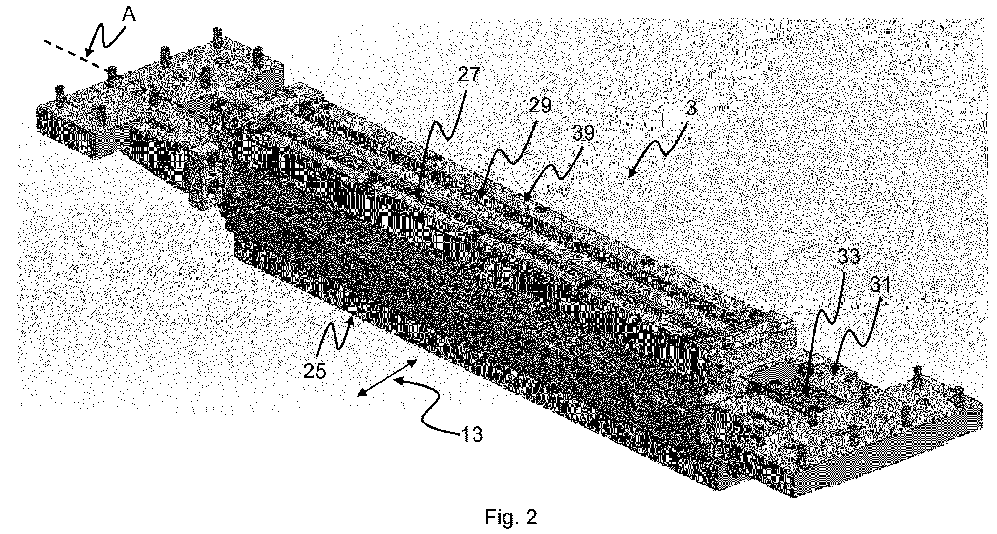

**Fig. 2** shows an embodiment of a powder application device 3.

The same or functionally equivalent elements are assigned the same reference numerals in all figures, such that reference is made in each case to the preceding description.

The powder application device 3 comprises a first powder feed channel 27 and a second powder feed channel 29, and the - passive - powder release mechanism 31 rotatably movable - about its own longitudinal axis A - between an open state and a closed state, wherein the powder release mechanism 31 is adapted and arranged to be passively rotated between the closed state and the open state. The longitudinal axis A of the powder release mechanism 31 extends parallel to the longitudinal direction or in the longitudinal direction, and perpendicular to the stroke direction.

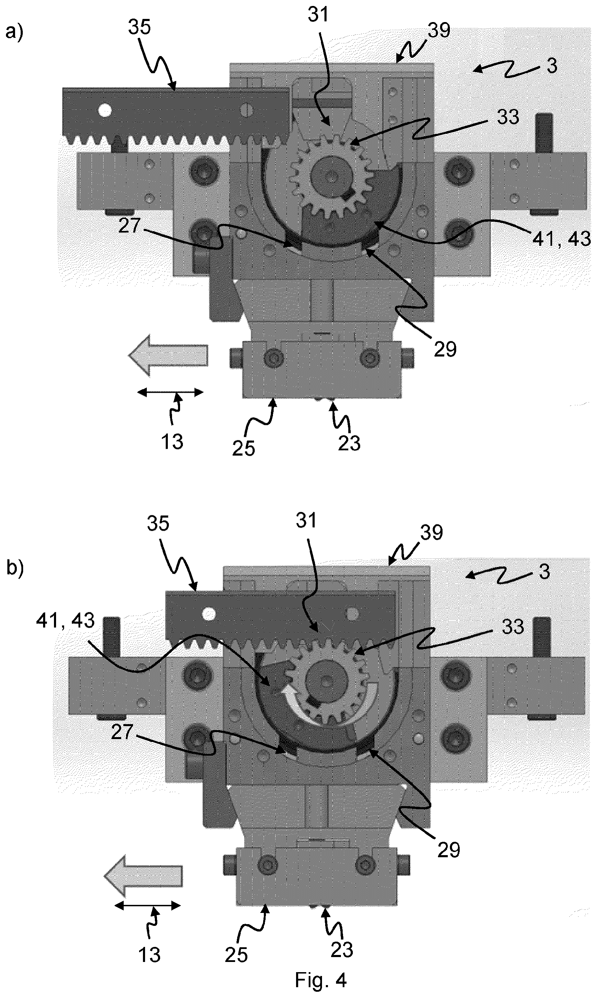

Preferably, the powder release mechanism 31 comprises a passive first actuation element 33, adapted to engage a passive second actuation element 35 - see figure 4 - of the manufacturing apparatus 1 when the powder application device 3 reaches a first predetermined position in the manufacturing apparatus 1, such that the powder release mechanism 31 is actuated when the first actuation element 33 engages the second actuation element 35. In the embodiment shown here, the first actuation element 33 is a single gearwheel. The powder release mechanism 31 does not comprise any spring, or - in other words - is free of springs. Preferably, the powder application device 3 does not comprise any spring, or - in other words - is free of springs.

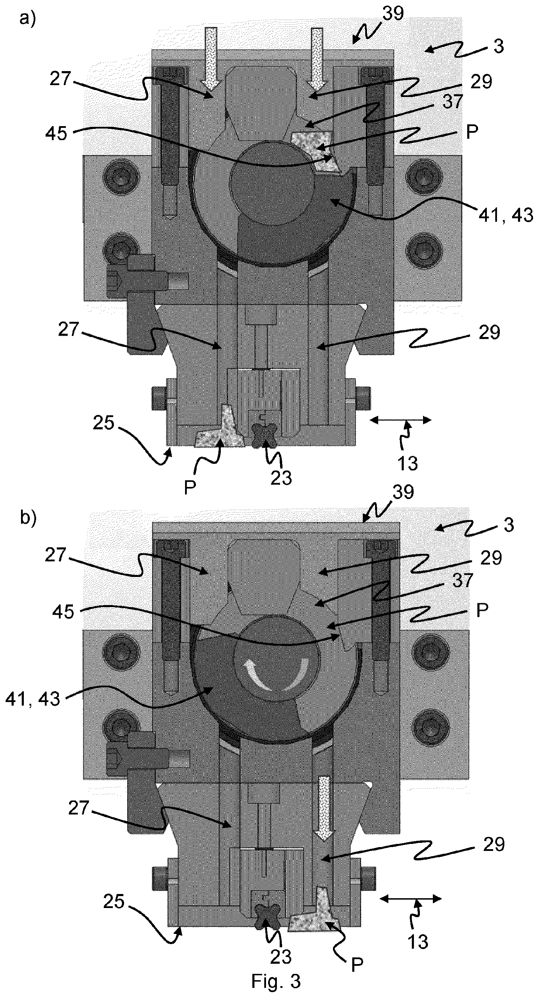

**Fig. 3** shows a cross-section of the powder application device 3 of figure 2.

Both the first and second powder feed channels 27, 29 open towards the lower side 25 and are arranged consecutively in the stroke direction of the powder application device 3 perpendicular to the longitudinal axis - which is perpendicular to the image plane in figure 3. The powder distributing element 23 is arranged between the first powder feed channel 27 and the second powder feed channel 29 in the stroke direction.

The powder application device 3 further comprises a powder storage chamber 37 located above lower parts of each of the powder feed channels 27, 29, respectively, in a height direction extending from the lower side 25 towards an upper side 39 of the powder application device 3, the powder storage chamber 37 opening towards the upper side 39.

Figure 3 shows the powder release mechanism 31 in the closed state at a), and in the open state at b).

In particular, the powder release mechanism 31 comprises at least one release element 41, in particular at least one first chamber wall 43 of the powder storage chamber 37 which is arranged rotatably about the longitudinal axis. In the alternative, or additionally, the powder storage chamber 37 may be arranged rotatably about its axis, or there may be a lid, rotatable about the longitudinal axis, the lid being arranged to block the first fluid connection in the closed state and to clear the first fluid connection in the open state. The powder storage chamber 37 may comprise a plurality of chamber walls, wherein the at least one first chamber wall 43 is rotatable, wherein at least one second chamber wall 45 is fixed.

In particular, the gearwheel is coupled to the at least one release element 41.

Further, the powder release mechanism 31 is designed and arranged such that a second fluid connection between the upper side 39 and the lower side 25 via the first powder feed channel 27 is open - i.e. clear, or free - in the closed state. Thus, powder material P can run from the upper side 39 to the lower side 25 through the first powder feed channel 27 even when the powder release mechanism 31 is in its closed state.

Preferably, as shown at b), the second fluid connection is closed in the open state. Preferably, the second fluid connection is closed in the open state by the same release element 41 which closes the first fluid connection in the closed state, in particular by the first chamber wall 41, or the lid. In this embodiment, the release element 41 blocks the first fluid connection in the closed state and at the same time clears the second fluid connection; and the release element 41 clears the first fluid connection in the open state and at the same time blocks the second fluid connection.

Preferably, the release element 41 is rotatable by an angle of 45° to 120°, preferably 50° to 110°, preferably 60° to 100°, preferably 70° to 90°, preferably more than 70°, preferably 80°. Advantageously, a large rotational movement is provided for the release element 41 in order to fully open the second powder feed channel 29 in the open state in order to avoid that any powder material P gets stuck.

**Fig. 4** shows a fundamental functionality of the powder release mechanism 31 of the powder application device 3 of figure 2.

In the embodiment shown here, the manufacturing apparatus 1 comprises the passive second actuation element 35 adapted to engage the first actuation element 33 of the powder application device 3 when the powder application device 3 reaches the first predetermined position on the second working area side 17, such that the powder release mechanism 31 is actuated when the first actuation element 33 engages - or meshes with - the second actuation element 35. In this embodiment, the second actuation element 35 is a rack, in particular a gear rack, a guide rack, a guideway rack, a steering rack, or a toothed rack, and the first actuation element 33 is a gearwheel, wherein the rack and the gearwheel are adapted to mesh with ach other.

The powder release mechanism 31 and the second actuation element 35 preferably are designed such that the powder release mechanism 31 is rotated in the open state when the powder application device 3 reaches the first predetermined position. In particular, as shown at a) and b), the powder release mechanism 31 is rotated in the open state while the powder application device 3 approaches an end position or dead centre of its stroke at the first predetermined position, in particular while the gearwheel meshes with the rack. The energy needed for the rotational motion of the powder release mechanism 31 is thus harvested from the linear movement of the powder application device 3 from the first working area side 15 to the second working area side 17.

Further, the powder release mechanism 31 and the second actuation element 35 are designed such that the powder release mechanism 31 is rotated in the closed state when the powder application device 3 leaves the first predetermined position. In other words, the powder release mechanism 31 is rotated in the closed state while the powder application device 3 leaves the end position or dead centre of its stroke, aiming for the first working area side 15, in particular while the gearwheel meshes with the rack. The energy needed for the rotational motion of the powder release mechanism 31 is then harvested from the linear movement of the powder application device 3 from the second working area side 17 to the first working area side 15.

The rotation of the powder release mechanism 31 is thus effected in a purely mechanical way, especially with no actors. In particular, no hydraulic, pneumatic or electric actors, neither aboard the powder application device 3 nor external to the powder application device 3, are provided to act upon the powder release mechanism 31.

With respect again to figure 3, a method for additively manufacturing objects from the powder material P using the manufacturing apparatus 1 comprises the following steps:
a) as shown at a) in figure 3, the powder storage chamber 37 is charged with the powder material P in the second predetermined position on the first working area side 15, wherein - in particular at the same time - the powder material P is also discharged through the first powder feed 27 channel onto the working area 11, in particular when the powder release mechanism 31 is in its closed state, wherein
b) the powder application device 3 is then displaced along the stroke direction - in a first orientation of the displacement - from the first working area 15 side to the second working area side 17 opposite to the first working area side 15 in the stroke direction, the powder material P applied to the working area 11 through the first powder feed channel 27 being distributed on, or in other words over, the working area 11, wherein,
c) as shown at b) in figure 3, when the powder application device 3 reaches the first predetermined position on the second working area side 17, the powder release mechanism 31 is rotated from the closed state to the open state, so that the powder material P is discharged from the powder storage chamber 37 onto the working area 11 through the second powder feed channel 29, wherein
d) thereafter, the powder application device 3 is displaced along the stroke direction - in a second orientation of the displacement - from the second working area 17 side back to the first working area side 15, wherein the powder material P discharged from the powder storage chamber 37 onto the working area 11 is distributed on, or in other words over, the working area 11.

The powder material is P is in particular distributed on the working area 11 during the movement of the powder application device 3 by the powder distributing element 23.

Further, the powder material P distributed over the working area 11 is preferably irradiated with the at least one energy beam 7 before step c) or in step c). Preferably, the powder material P distributed over the working area 11 is irradiated with the at least one energy beam 7 in step b). In addition, or in the alternative, the powder material P is irradiated with the at least one energy beam 7 in step d) or after step d).

Preferably, steps a) to d) are repeated, preferably until the manufacturing process is finished, and more specifically, no further powder material layer is needed in the working area 11 in order to manufacture the desired object or objects.

## Claims

1. Powder application device (3) for applying a powder material (P) to a working area (11) of a manufacturing apparatus (1) for additive manufacturing of objects from the powder material (P), wherein
- the powder application device (3) comprises a powder distributing element (23) located on a lower side (25) of the powder application device (3), wherein the powder distributing element (23) faces the working area (11) of the manufacturing apparatus (1) when the powder application device (3) is installed at the manufacturing apparatus (1), the powder distributing element (23) extending along a longitudinal direction of the powder application device (3) and being designed and arranged to distribute the powder material (P) over the working area (11), wherein
- the powder application device (3) comprises a first powder feed channel (27) and a second powder feed channel (29), the powder feed channels (27, 29) both opening towards the lower side (25) and being arranged consecutively in a stroke direction of the powder application device (3) perpendicular to the longitudinal direction, wherein the powder distributing element (23) is arranged between the first and second powder feed channels (27, 29) in the stroke direction, wherein
- the powder application device (3) further comprises a powder storage chamber (37) located above a lower part of the second powder feed channel (29) in a height direction extending from the lower side (25) towards an upper side (39) of the powder application device (3), the powder storage chamber (37) opening towards the upper side (39), and
- the powder application device (3) comprises a powder release mechanism (31) rotatably movable between an open state and a closed state, wherein a first fluid connection for powder material (P) between the powder storage chamber (37) and the lower side (25) via the second powder feed channel (29) is open in the open state and closed in the closed state, and wherein
- the powder release mechanism (31) is adapted and arranged to be passively rotated between the closed state and the open state.

2. Powder application device (3) according to claim 1, wherein the powder release mechanism (31) comprises at least one release element (41), selected from the group consisting of
- at least one chamber wall (43) of the powder storage chamber (37) which is arranged rotatably about a longitudinal axis,
- the powder storage chamber (37), arranged rotatably about the longitudinal axis,
- a lid, rotatable about the longitudinal axis, the lid being arranged to block the first fluid connection in the closed state and to clear the first fluid connection in the open state, and
- a combination of at least two of said release elements.

3. Powder application device (3) according to any of the preceding claims, wherein the powder release mechanism (31) comprises a passive first actuation element (33), adapted to engage a passive second actuation element (35) of the manufacturing apparatus (1) when the powder application device (3) reaches a first predetermined position in the manufacturing apparatus (1), such that the powder release mechanism (31) is actuated when the first actuation element (33) engages the second actuation element (35), wherein preferably the first actuation element (33) is a gear.

4. Powder application device (3) according to any of the preceding claims, wherein the powder release mechanism (31) is designed and arranged such that a second fluid connection between the upper side (39) and the lower side (25) via the first powder feed channel (27) is open in the closed state.

5. Powder application device (3) according to any of the preceding claims, wherein the release element (41) is rotatable by an angle of 45° to 120°, preferably 50° to 110°, preferably 60° to 100°, preferably 70° to 90°, preferably more than 70°, preferably 80°.

6. Manufacturing apparatus (1) for the additive manufacturing of objects from a powder material (P), comprising
- at least one beam generating device (5), adapted to generate at least one energy beam (7),
- at least one scanner device (9), adapted to locally selectively scan a working area (11) with the at least one energy beam (7) in order to manufacture at least one object from the powder material (P) arranged in the working area (11), and
- a powder application device (3) according to any of the preceding claims, wherein
- the powder application device (3) is moveable relative to the working area (11).

7. Manufacturing apparatus (1) according to claim 6, wherein the powder application device (3) is bidirectionally moveable across the working area (11) along a stroke direction.

8. Manufacturing apparatus (1) according to any of claims 6 or 7, wherein the manufacturing apparatus (1) comprises a passive second actuation element (35) adapted to engage the first actuation element (33) of the powder application device (3) when the powder application device (3) reaches a first predetermined position relative to the working area (11), such that the powder release mechanism (31) of the powder application device (3) is actuated when the first actuation element (33) engages the second actuation element (35), wherein preferably the second actuation element (35) is a rack.

9. Manufacturing apparatus (1) according to claim 8, wherein the powder release mechanism (31) and the second actuation element (35) are designed such that the powder release mechanism (31) is rotated in the open state when the powder application device (3) reaches the first predetermined position.

10. Manufacturing apparatus (1) according to claim 9, wherein the powder release mechanism (31) and the second actuation element (35) are designed such that the powder release mechanism (31) is rotated in the closed state when the powder application device (3) leaves the first predetermined position.

11. Manufacturing apparatus (1) according to any of claims 7 to 10, wherein the powder application device (3) is moveable between a first working area side (15) of the working area (11) and a second working area side (17) thereof, the second working area side (17) being opposite to the first working area side (15) in the stroke direction, wherein a powder supply device (19) is arranged on the first working area side (15), the powder supply device (19) being adapted to release powder material (P) onto the upper side (39) of the powder application device (3) when the powder application device (3) is at a second predetermined position on the first working area side (15), and wherein the second actuation element (35) is arranged on the second working area side (17).

12. Method for additively manufacturing objects from a powder material (P) using a manufacturing apparatus (1) according to one of claims 6 to 11, wherein
a) the powder storage chamber (37) of the powder application device (3) is charged with powder material (P) at the first working area side (15), wherein powder material (P) is discharged through the first powder feed channel (27) onto the working area (11), wherein
b) the powder application device (3) is displaced along a stroke direction from the first working area side (15) to a second working area side (17) opposite to the first working area side (15) in the stroke direction, the powder material (P) applied to the working area (11) through the first powder feed channel (27) being distributed on the working area (11), wherein,
c) when the powder application device (3) reaches the second working area side (17), the powder release mechanism (31) is rotated from the closed state to the open state, so that powder material (P) is discharged from the powder storage chamber (37) onto the working area (11) through the second powder feed channel (29), wherein
d) the powder application device (3) is displaced along the stroke direction from the second working area side (17) back to the first working area side (15), wherein the powder material (P) discharged from the powder storage chamber (37) onto the working area (11) is distributed on the working area (11).

13. Method according to claim 12, wherein the powder material (P) arranged in the working area (11) is irradiated with the at least one energy beam before step c) or in step c).
